# FASCICULE DE BREVET EUROPEEN

(11) **EP 3 224 406 B1**
(45) Date de publication et mention de la délivrance du brevet: **28.10.2020**
(21) Numéro de dépôt: 15798087.1
(22) Date de dépôt: 20.11.2015
(51) Int. Cl.: D07B 3/00, D07B 7/02, D02G 3/48, D07B 1/06

(54) **PROCEDE DE FRACTIONNEMENT**
TEILUNGSVERFAHREN
SPLITTING METHOD

(30) Priorité: 25.11.2014 FR 1461395
(43) Date de publication de la demande: 04.10.2017
(73) Titulaire: Compagnie Générale des Etablissements Michelin, 63000 Clermont-Ferrand (FR)
(72) Inventeur: CALVET, Marc, F-63040 Clermont-Ferrand Cedex 9 (FR); BARGUET, Henri, F-63040 Clermont-Ferrand Cedex 9 (FR); AUBAREDE, Francis, F-63040 Clermont-Ferrand Cedex 9 (FR)
(74) Mandataire: Desbordes, Guillaume
(86) Numéro de dépôt international: PCT/EP2015/077255
(87) Numéro de publication internationale: WO 2016/083265

(56) Documents cités:
- WO-A1-97/12092
- DE-A1- 1 510 149
- DE-A1- 19 638 984
- FR-A1- 2 897 076
- JP-A- H02 269 885
- JP-A- H09 158 069
- JP-A- 2002 266 264
- JP-A- 2010 179 773
- JP-A- 2010 264 878

## Description

L'invention concerne un procédé de fabrication d'au moins des premier et deuxième assemblages de M1 éléments filaires et M2 éléments filaires, un assemblage d'éléments filaires ainsi qu'un pneumatique comprenant un tel assemblage.

On connait de l'état de la technique un pneumatique pour véhicule poids lourd à armature de carcasse radiale. Un tel pneumatique comprend une armature de carcasse radiale ancrée dans deux bourrelets et surmontée radialement par une armature de sommet elle-même surmontée d'une bande de roulement qui est réunie aux bourrelets par deux flancs.

Dans un tel pneumatique, l'armature de sommet comprend une armature de travail, une armature de frettage, une armature de protection, et de façon optionnelle, une armature de triangulation. L'agencement relatif de ces armatures les unes par rapport aux autres peut varier. Généralement, l'armature de protection est l'armature radialement la plus externe, l'armature de travail est l'armature radialement la plus interne, l'armature de frettage étant agencée entre l'armature de protection et l'armature de travail.

Chaque armature comprend une unique ou plusieurs nappes. Chaque nappe comprend des éléments de renfort agencés côte à côte parallèlement les uns aux autres. Les éléments de renfort font un angle qui varie selon l'armature à laquelle la nappe appartient. Chaque élément de renfort comprend un ou plusieurs assemblages d'éléments filaires, chaque assemblage comprenant plusieurs fils unitaires métalliques assemblés entre eux, soit par câblage soit par retordage.

On connait de l'état de la technique un assemblage d'éléments filaires comprenant une unique couche d'éléments filaires, ici trois fils, présentant un diamètre de 0,26 mm enroulés ensemble en hélice au pas de 5 mm. Cet assemblage est désigné par l'appellation « 3.26 » conformément à la nomenclature usuelle.

Afin d'assurer le bon fonctionnement de chaque armature, et notamment des armatures de frettage et de protection, on souhaite pouvoir contrôler l'allongement structural de ces assemblages d'éléments filaires, et tout particulièrement pouvoir obtenir un allongement structural élevé lorsque cela s'avère nécessaire. L'utilisation d'un procédé de retordage classique permet d'obtenir un allongement structural au plus égal à 0,5% pour le câble 3.26 décrit ci-dessus.

Afin d'augmenter la valeur de l'allongement structural, on connait de l'état de la technique plusieurs procédés et installations de fabrication d'un assemblage de fils comprenant une unique couche de plusieurs fils enroulés ensemble en hélice. De tels procédés et installations sont décrits dans les documents EP0548539, EP1000194, EP0622489 ou encore EP0143767. Lors de ces procédés, afin d'obtenir l'allongement structural le plus élevé possible, on préforme les fils. Toutefois, cette étape de préformation des fils, qui nécessite une installation particulière, d'une part, rend le procédé relativement peu productif par rapport à un procédé dépourvu d'étape de préformation sans pour autant permettre d'atteindre des allongements structuraux élevés et, d'autre part, altère les fils ainsi préformés en raison des frottements avec les outils de préformation. En effet, l'utilisation d'un procédé d'assemblage utilisant une étape de préformation des fils permet d'obtenir un allongement structural au plus égal à 2,0% pour le câble 3.26 décrit ci-dessus.

Des procédés permettant d'obtenir des assemblages préformés à double hélice sont quant à eux décrits dans les documents DE1510149, DE19638984 et WO97/12092 .

L'invention a pour but de contrôler l'allongement structural d'assemblages d'éléments filaires, et tout particulièrement de pouvoir atteindre un allongement structural élevé lorsque cela s'avère nécessaire sans nécessairement avoir à utiliser une étape de préformation.

A cet effet, l'invention a pour objet un procédé de fabrication d'au moins des premier et deuxième assemblages à simple hélice présentant une aération de M1 éléments filaires et M2 éléments filaires, au moins l'un des premier et deuxième assemblages comprenant plusieurs des éléments filaires enroulés ensemble en hélice, le procédé comprenant :
- une étape d'assemblage de M éléments filaires ensemble en une couche des M éléments filaires autour d'un noyau transitoire pour former un assemblage transitoire, et
- une étape de fractionnement de l'assemblage transitoire en au moins les premier et deuxième assemblages de M1 éléments filaires et M2 éléments filaires ;
dans lequel chaque élément filaire comprend un unique monofilament élémentaire.

L'invention a également pour objet un procédé de fabrication d'au moins des premier et deuxième assemblages à simple hélice présentant une aération de M1 éléments filaires et M2 éléments filaires, au moins l'un des premier et deuxième assemblages comprenant plusieurs des éléments filaires enroulés ensemble en hélice , le procédé comprenant :
- une étape d'assemblage de M éléments filaires ensemble en une couche des M éléments filaires autour d'un noyau transitoire pour former un assemblage transitoire, et
- une étape de fractionnement de l'assemblage transitoire en au moins les premier et deuxième assemblages à structure ouverte de M1 éléments filaires et M2 éléments filaires ;
dans lequel chaque élément filaire (14) comprend un assemblage de plusieurs monofilaments élémentaires.

Grâce au procédé selon l'invention, il est possible de contrôler l'allongement structural des assemblages obtenus et si cela s'avère nécessaire, d'obtenir un allongement structural relativement élevé et ceci sans avoir à utiliser une étape de pré-formation.

En effet, lors de l'étape d'assemblage de l'assemblage transitoire, on confère aux M éléments filaires une courbure qu'ils conserveront durant et après l'étape de fractionnement. Or, durant l'étape de fractionnement de cet assemblage transitoire, le noyau transitoire étant fractionné entre les premier et deuxième assemblages d'éléments filaires ou séparé des premier et deuxième assemblages d'éléments filaires, le ou les assemblages obtenus présentent une aération importante liée à la réduction ou la suppression du diamètre du noyau transitoire et à la conservation de la courbure des éléments filaires. Cette aération permet d'obtenir des assemblages présentant un allongement structural important si cela s'avère nécessaire.

Grâce au procédé selon l'invention, on fabrique simultanément les premier et deuxième assemblages de M1 éléments filaires et M2 éléments filaires.

Chaque premier et deuxième assemblage est à simple hélice. Par définition, un assemblage à simple hélice est un assemblage dans lequel l'axe de chaque élément filaire décrit une unique hélice, contrairement à un assemblage à double hélice dans lequel l'axe de chaque élément filaire décrit une première hélice autour de l'axe de l'assemblage et une deuxième hélice autour d'une hélice décrite par l'axe de l'assemblage.

En d'autres termes, lorsque l'assemblage s'étend selon une direction sensiblement rectiligne, chaque assemblage comprenant une ou plusieurs couches d'éléments filaires enroulés ensemble en hélice, chaque élément filaire de la couche décrit une trajectoire en forme d'hélice autour de la direction sensiblement rectiligne de sorte que la distance entre le centre de chaque élément filaire d'une couche donnée et l'axe de la direction sensiblement rectiligne soit sensiblement constante et égale pour tous les éléments filaires de la couche donnée. Au contraire, lorsqu'un assemblage à double hélice s'étend selon une direction sensiblement rectiligne, la distance entre le centre de chaque élément filaire d'une couche donnée et la direction sensiblement rectiligne est différente pour tous les éléments filaires de la couche donnée.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 3 mm.

Dans un mode de réalisation, chaque élément filaire comprend un unique monofilament élémentaire.

Dans un autre mode de réalisation, chaque élément filaire comprend un assemblage de plusieurs monofilaments élémentaires. Ainsi, par exemple, chaque élément filaire comprend un toron de plusieurs monofilaments élémentaires. Chaque toron comprend de préférence une ou plusieurs couches de monofilaments élémentaires enroulés ensemble en hélice.

Dans ces deux modes de réalisation, chaque monofilament élémentaire est de préférence métallique. Par métallique, on entend par définition un monofilament élémentaire constitué majoritairement (c'est-à-dire pour plus de 50% de sa masse) ou intégralement (pour 100% de sa masse) d'un matériau métallique. Chaque monofilament élémentaire est préférentiellement en acier, plus préférentiellement en acier perlitique (ou ferrito-perlitique) au carbone désigné ci-après par "acier au carbone", ou encore en acier inoxydable (par définition, acier comportant au moins 10,5% de chrome).

Lorsqu'un acier au carbone est utilisé, sa teneur en carbone (% en masse d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3500 MPa (mesure effectuée en traction selon la norme ISO 6892-1 de 2009).

Dans un mode de réalisation préféré, le ou chaque monofilament élémentaire présente un diamètre allant de 0,05 mm à 0,50 mm, de préférence de 0,10 mm à 0,40 mm et plus préférentiellement de 0,15 mm à 0,35 mm.

Dans un premier mode de réalisation, l'étape de fractionnement de l'assemblage transitoire comprend une étape de séparation du noyau transitoire des premier et deuxième assemblages.

Ainsi, dans ce premier mode de réalisation, on obtient deux assemblages d'éléments filaires comprenant chacun une couche respectivement des M1, M2 éléments filaires enroulés ensemble en hélice. Chaque assemblage d'éléments filaires est dépourvu d'âme centrale. Dans ce mode de réalisation, le premier assemblage est constitué de M1 éléments filaires enroulés ensemble et répartis en une seule couche autour de l'axe du premier assemblage. De façon analogue, le deuxième assemblage de ce mode de réalisation est constitué de M2 éléments filaires enroulés ensemble et répartis en une seule couche autour de l'axe du deuxième assemblage. On parle également d'assemblages de structure 1xM1 et 1xM2 ou bien encore d'assemblages à structure ouverte (« open-cord » en anglais).

En d'autres termes, dans ce premier mode de réalisation, le noyau transitoire comprenant au moins un fil, chaque fil du noyau transitoire n'appartient pas aux premier et deuxième assemblages de M1 éléments filaires et M2 éléments filaires. On a donc M1+M2=M.

Dans une première variante préférée de ce premier mode de réalisation, durant l'étape de fractionnement, on sépare le premier assemblage d'un ensemble transitoire formé par le deuxième assemblage et le noyau transitoire, puis on sépare le deuxième assemblage et le noyau transitoire l'un de l'autre. Ainsi, en séparant d'abord le premier assemblage de l'ensemble transitoire, on permet une sortie plus facile du noyau transitoire de la couche formée par les éléments filaires du deuxième assemblage lors de la séparation entre le deuxième assemblage et le noyau transitoire.

Dans une deuxième variante, durant l'étape de fractionnement, on sépare simultanément le noyau transitoire, le premier assemblage et le deuxième assemblage deux à deux les uns des autres.

Avantageusement, le procédé comprend une étape de recyclage du noyau transitoire durant laquelle:
- on récupère le noyau transitoire en aval de l'étape de fractionnement, et
- on introduit le noyau transitoire récupéré précédemment en amont de l'étape d'assemblage.

Ainsi, on ré-utilise le noyau transitoire.

Dans un mode de réalisation préférentiel, l'étape de recyclage du noyau transitoire peut se faire en continu, c'est-à-dire dans laquelle on ré-introduit, sans étape de stockage intermédiaire du noyau transitoire, le noyau transitoire sortant de l'étape de séparation, dans l'étape d'assemblage.

Dans un autre mode de réalisation, l'étape de recyclage du noyau transitoire est discontinue, c'est-à-dire avec une étape de stockage intermédiaire du noyau transitoire.

Plus préférentiellement, on utilise un noyau transitoire textile. Par textile, on entend que le noyau transitoire est non-métallique. En effet, le cycle de torsion-détorsion que subit le noyau transitoire lors des étapes d'assemblage et de fractionnement crée, lorsque le noyau transitoire est métallique, des torsions résiduelles rendant le noyau transitoire recyclé moins facile à utiliser. Lorsque le noyau transitoire est textile, celle-ci ne présente aucune torsion résiduelle et donc peut être réutilisé facilement.

Dans un mode de réalisation, le noyau transitoire textile comprend un monofilament élémentaire textile.

Dans un autre mode de réalisation, le noyau transitoire textile comprend un ou plusieurs brins multifilamentaires textiles comprenant plusieurs monofilaments élémentaires textiles. Dans une variante, le noyau transitoire comprend un unique brin multifilamentaire appelé surtors comprenant plusieurs monofilaments élémentaires. Dans une variante, le noyau transitoire comprend plusieurs brins multifilamentaires, chacun appelé surtors, comprenant chacun plusieurs monofilaments élémentaires et assemblés ensemble en hélice pour former un retors.

Avantageusement, le ou chaque matériau textile de chaque monofilament élémentaire textile est choisi parmi un polyester, un polyamide, une polycétone, un alcool polyvinylique, une cellulose, une fibre minérale, une fibre naturelle ou un mélange de ces matériaux.

Parmi les polyesters, on citera le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Parmi les polyamides, on citera un polyamide aliphatique comme le nylon ou un polyamide aromatique comme l'aramide. Parmi les alcools polyvinyliques, on citera le Kuralon ®. Parmi les celluloses, on citera la rayonne. Parmi les fibres minérales, on citera les fibres de verre et de carbone. Parmi les fibres naturelles, on citera les fibres de chanvre ou de lin.

Dans un deuxième mode de réalisation, l'étape de fractionnement de l'assemblage transitoire comprend une étape de fractionnement du noyau transitoire entre au moins les premier et deuxième assemblages.

Ainsi, dans ce deuxième mode de réalisation, on obtient deux assemblages d'éléments filaires comprenant chacun une couche respectivement de P1, P2 éléments filaires enroulés ensemble en hélice, et pour au moins un des assemblages, une âme centrale comprenant ou constituée d'au moins une partie du noyau transitoire autour de laquelle sont enroulés les éléments filaires de la couche.

En d'autres termes, dans ce deuxième mode de réalisation, le noyau transitoire comprenant N élément(s) filaire(s), au moins un du ou des N élément(s) filaire(s) du noyau transitoire appartient à au moins l'un des premier et deuxième assemblages de M1 éléments filaires et M2 éléments filaires.

Avantageusement, durant l'étape de fractionnement, on fractionne au moins une première partie du noyau transitoire avec des premiers éléments filaires de l'assemblage transitoire de façon à former le premier assemblage.

Ainsi, le premier assemblage comprend une couche de P1 éléments filaires enroulés ensemble en hélice et une âme centrale comprenant ou constituée par une première partie (N1 élément(s) filaire(s)) des N éléments filaires du noyau transitoire et autour de laquelle sont enroulés ensemble en hélice les P1 éléments filaires. On a P1+N1=M1.

Avantageusement, durant l'étape de fractionnement, on fractionne au moins une deuxième partie du noyau transitoire avec des deuxièmes éléments filaires de l'assemblage transitoire de façon à former le deuxième assemblage.

Ainsi, le deuxième assemblage comprend une couche de P2 éléments filaires enroulés ensemble en hélice et une âme centrale comprenant ou constituée par une deuxième partie (N2 élément(s) filaire(s)) des N éléments filaires du noyau transitoire et autour de laquelle sont enroulés ensemble en hélice les P2 éléments filaires. On a P2+N2=M2.

De préférence, on forme simultanément les premier et deuxième assemblages.

De préférence, avant l'étape de fractionnement, les première et deuxième parties du noyau transitoire constituent le noyau transitoire. Ainsi, les première et deuxième parties du noyau transitoire sont complémentaires. On a donc N1+N2=N. Dans une variante, on pourrait avoir N1+N2<N.

Dans une variante, le premier assemblage comprend une couche de P1 éléments filaires enroulés ensemble en hélice autour d'une âme centrale comprenant ou constituée par le noyau transitoire et le deuxième assemblage comprend une couche de P2=M2 éléments filaires enroulés ensemble en hélice et dépourvu d'âme centrale.

Dans un mode de réalisation, on réalise l'étape d'assemblage par retordage. Dans un tel cas, les fils ou torons subissent à la fois une torsion collective et une torsion individuelle autour de leur propre axe, ce qui génère un couple de détorsion sur chacun des fils ou torons.

Dans un autre mode de réalisation, on réalise l'étape d'assemblage par câblage. Dans ce cas, les fils ou torons ne subissent pas de torsion autour de leur propre axe, en raison d'une rotation synchrone avant et après le point d'assemblage.

De façon préférée, dans le cas d'une étape d'assemblage par retordage, le procédé comprend une étape d'équilibrage de l'assemblage transitoire. Ainsi, l'étape d'équilibrage étant réalisée sur l'assemblage constitué des M éléments filaires et du noyau transitoire, l'étape d'équilibrage est implicitement réalisée en amont de l'étape de fractionnement. On évite d'avoir à gérer la torsion résiduelle imposée lors de l'étape d'assemblage lors du trajet du câble en aval de l'étape d'assemblage, notamment dans les moyens de guidage, par exemple les poulies. En outre, l'étape d'équilibrage impose une courbure aux éléments filaires supérieure à celle obtenue avec une étape d'assemblage par câblage sans étape de préformation. Cette courbure plus élevée contribue à l'atteinte préférentielle d'un allongement structural élevé.

Avantageusement, le procédé comprend une étape d'équilibrage d'au moins un des premier et deuxième assemblages après l'étape de fractionnement.

Avantageusement, le procédé comprend une étape d'entretien de la rotation des premier et deuxième assemblages autour de leur direction de défilement respective. On réalise cette étape après l'étape de fractionnement et avant l'étape d'équilibrage d'au moins un des premier et deuxième assemblages.

De préférence, le procédé est dépourvu d'étapes de préformation individuelle de chacun des éléments filaires. Dans les procédés de l'état de la technique utilisant une étape de préformation individuelle de chacun des éléments filaires, ces derniers se voient imposés une forme par des outils de préformation, par exemple des galets, ces outils créant des défauts à la surface des éléments filaires. Ces défauts réduisent notablement l'endurance des éléments filaires et donc de l'assemblage. A l'inverse, le procédé permet préférentiellement d'éviter la mise en oeuvre d'étapes de préformation et donc la création de défauts. L'assemblage obtenu est donc bien meilleur en endurance qu'un assemblage présentant le même allongement structural mais comprenant au moins un élément filaire préformé.

Avantageusement, le au moins l'un des premier et deuxième assemblages est à simple hélice et comprend une couche de plusieurs éléments filaires enroulés ensemble en hélice.

De préférence, le au moins l'un des premier et deuxième assemblages présente un allongement structural supérieur ou égal à 2,0% mesuré selon la norme ASTM A931-08.

Avantageusement, chaque élément filaire de la couche présente une torsion autour de son propre axe de révolution. Un tel assemblage est fabriqué grâce à un procédé utilisant une étape de retordage. Une telle torsion est visible par observation au microscope de chaque élément filaire.

Avantageusement, chaque élément filaire de la couche est dépourvu de marques de préformation. Ainsi, l'aération conférée au câble et donc son allongement structural sont conférés par le procédé précédemment décrit et pas par une étape de préformation, étape qui conduirait à laisser des marques sur chaque élément filaire. De telles marques seraient visibles par observation de chaque élément filaire au microscope.

Avantageusement, le au moins l'un des premier et deuxième assemblages d'éléments filaires présente un allongement structural supérieur ou égal à 3,0%, de préférence 4,0% et plus préférentiellement 5,0% mesuré selon la norme ASTM A931-08.

Dans un mode de réalisation, le au moins l'un des premier et deuxième assemblages d'éléments filaires comprend une unique couche de plusieurs éléments filaires enroulés ensemble en hélice et est dépourvu d'âme centrale. En d'autres termes, l'assemblage est constitué d'une unique couche de plusieurs éléments filaires enroulés ensemble.

Dans un autre mode de réalisation, le au moins l'un des premier et deuxième assemblages d'éléments filaires comprend une couche de plusieurs éléments filaires enroulés ensemble en hélice et une âme centrale autour de laquelle sont enroulés ensemble en hélice les éléments filaires de la couche.

Dans un mode de réalisation, le au moins l'un des premier et deuxième assemblages étant constitué d'un unique toron, l'assemblage présente un diamètre inférieur ou égal à 2,4 mm.

Dans un autre mode de réalisation, le au moins l'un des premier et deuxième assemblages étant constitué d'au moins deux torons, l'assemblage présente un diamètre inférieur ou égal à 6,5 mm.

Par diamètre de l'assemblage, on entend le diamètre du cercle le plus petit à l'intérieur duquel sont inscrits tous les éléments filaires de l'assemblage. Un tel diamètre peut être mesuré par observation au projecteur de profil.

Par exemple, un pneumatique comprend un assemblage d'éléments filaires tel que défini ci-dessus.

Un tel pneumatique est notamment destiné à équiper des véhicules à moteur de type tourisme, SUV (*"Sport Utility Vehicles*"), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

De préférence, le pneumatique comprend une bande de roulement et une armature de sommet agencée radialement à l'intérieur de la bande de roulement. L'armature de sommet comprend de préférence une armature de travail et une armature de protection, l'armature de protection étant intercalée radialement entre la bande de roulement et l'armature de travail. Dans un mode de réalisation préféré, chaque nappe de protection comprenant un ou plusieurs éléments de renfort, dit de protection, chaque élément de renfort de protection comprend un assemblage tel que décrit ci-dessus.

Selon une caractéristique optionnelle du pneumatique, le ou les éléments de renfort de protection font un angle au moins égal à 10°, de préférence allant de 10° à 35° et plus préférentiellement de 15° à 35° avec la direction circonférentielle du pneumatique.

Selon une autre caractéristique optionnelle du pneumatique, chaque nappe de travail comprenant des éléments de renfort, dit de travail, les éléments de renfort de travail font un angle au plus égal à 60°, de préférence allant de 15° à 40° avec la direction circonférentielle du pneumatique.

Dans un mode de réalisation préféré, l'armature de sommet comprend une armature de frettage comprenant au moins une nappe de frettage. Dans un mode de réalisation préféré, chaque nappe de frettage comprenant un ou plusieurs éléments de renfort, dit de frettage, chaque élément de frettage comprend un assemblage tel que décrit ci-dessus.

Selon une caractéristique optionnelle du pneumatique, le ou les éléments de renfort de frettage font un angle au plus égal à 10°, de préférence allant de 5° à 10° avec la direction circonférentielle du pneumatique.

Dans un mode de réalisation préféré, l'armature de carcasse est agencée radialement à l'intérieur de l'armature de sommet.

Avantageusement, l'armature de carcasse comprend au moins une nappe de carcasse comprenant des éléments de renfort, dit de carcasse, les éléments de renfort de carcasse faisant un angle supérieur ou égal à 65°, de préférence à 80° et plus préférentiellement allant de 80° à 90° par rapport à la direction circonférentielle du pneumatique.

L'invention sera mieux comprise à la lecture de la description qui va suivre, donnée uniquement à titre d'exemple non limitatif et faite en se référant aux dessins dans lesquels:
- la figure 1 est un schéma d'une installation permettant de mettre en oeuvre un procédé selon un premier mode de réalisation de l'invention et de fabriquer le câble de la figure 5 ;
- les figures 2 et 3 sont des schémas de moyens de séparation de l'installation de la figure 1 ;
- la figure 4 est une vue en coupe perpendiculaire à l'axe de l'assemblage (supposé rectiligne et au repos) d'un premier assemblage transitoire ;
- la figure 5 est une vue en coupe perpendiculaire à l'axe de l'assemblage (supposé rectiligne et au repos) d'un assemblage selon un premier mode de réalisation de l'invention fabriqué au moyen de l'installation de la figure 1 ;
- la figure 6 est un schéma d'une installation permettant de mettre en oeuvre un procédé selon un deuxième mode de réalisation de l'invention et de fabriquer le câble de la figure 8 ;
- la figure 7 est une vue en coupe perpendiculaire à l'axe de l'assemblage (supposé rectiligne et au repos) d'un deuxième assemblage transitoire,
- la figure 8 est une vue en coupe perpendiculaire à l'axe de l'assemblage (supposé rectiligne et au repos) d'un assemblage selon un deuxième mode de réalisation de l'invention fabriqué au moyen de l'installation de la figure 6, et
- la figure 9 est un schéma d'une installation permettant de mettre en oeuvre un procédé selon un troisième mode de réalisation de l'invention et de fabriquer le câble de la figure 1.

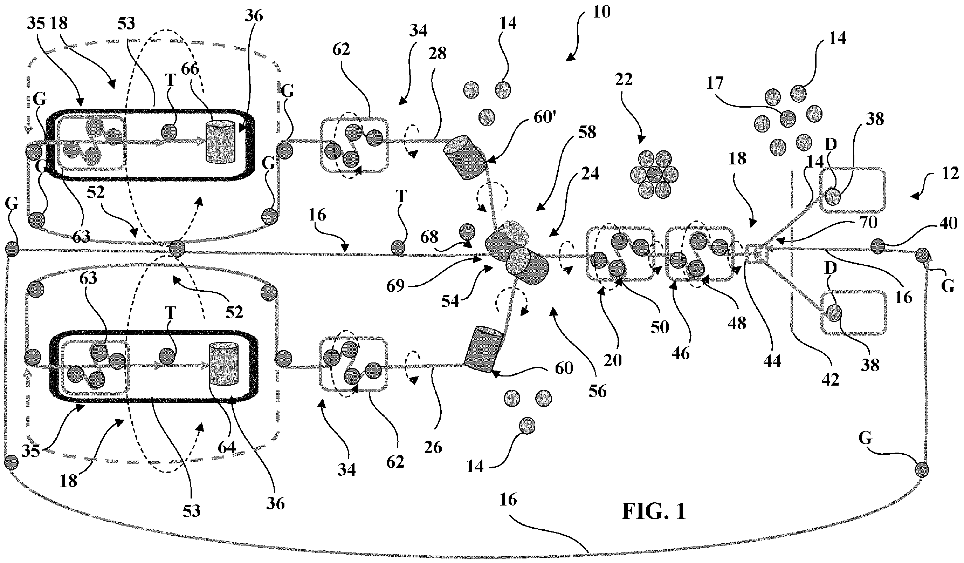

On a représenté sur la figure 1 une installation de fabrication d'au moins des premier et deuxième assemblages de M1 éléments filaires et M2 éléments filaires. Cette installation est désignée par la référence générale 10.

L'installation 10 comprend, d'amont en aval en considérant le sens de défilement des éléments filaires :
- des moyens 12 d'alimentation de M éléments filaires 14 et d'un noyau transitoire 16,
- des moyens 18 d'assemblage des M éléments filaires 14 ensemble en une couche de M éléments filaires 14 autour du noyau transitoire 16 pour former un assemblage transitoire 22,
- des moyens 20 d'équilibrage de l'assemblage transitoire 22 comprenant, ici constitué, des M éléments filaires 14 et du noyau transitoire 16,
- des moyens 24 de fractionnement des M éléments filaires 14 et du noyau transitoire 16 en au moins des premier et deuxième assemblages 26, 28 de M1 éléments filaires et M2 éléments filaires,
- des moyens 34 d'entretien de la rotation de chaque premier et deuxième assemblage 26, 28 autour de leur direction de défilement respective agencés en aval des moyens de fractionnement 24,
- des moyens d'équilibrage 35 d'au moins un des premier et deuxième assemblages 26, 28 agencés en aval des moyens d'entretien 34 de la rotation, et
- des moyens 36 de stockage des premier et deuxième assemblages 26, 28.

L'installation 10 comprend également des moyens de guidage G, de déroulage D et de traction T des éléments filaires et des assemblages classiquement utilisés par l'homme du métier, par exemple des poulies et des cabestans.

Les moyens d'alimentation 12 comprennent ici six bobines 38 de stockage de chaque élément filaire 14 ainsi qu'une bobine 40 de stockage du noyau transitoire 16. Sur la figure 1, seules deux des six bobines 38 sont représentées à des fins de clarté de la figure.

Les moyens d'assemblage 18 comprennent un répartiteur 42 et un grain d'assemblage 44. Les moyens d'assemblage 18 comprennent des moyens 46 de retordage des M éléments filaires 14 et du noyau transitoire 16. Les moyens de retordage 46 comprennent un retordeur 48, également appelé communément « twister » par l'homme du métier, par exemple un twister à quatre poulies. En aval de ces moyens de retordage 46, les moyens d'équilibrage 20 comprennent un twister 50, par exemple un twister à quatre poulies. Enfin, en aval du retordeur 48, les moyens d'assemblage 18 comprennent une lyre 52 ainsi qu'une nacelle 53 portant les moyens d'équilibrage 35 final et les moyens 36 de stockage. La lyre 52 et la nacelle 53 sont montées mobiles en rotation de façon à conserver le pas d'assemblage des assemblages 26, 28.

Dans ce premier mode de réalisation, les moyens de fractionnement 24 comprennent des moyens 54 de séparation du noyau transitoire 16 des premier et deuxième assemblages 26, 28. Ces moyens de séparation 54 comprennent, d'une part, des moyens 56 de séparation du premier assemblage 26 d'un ensemble transitoire 25 formé par le deuxième assemblage 28 et le noyau transitoire 16 et d'autre part, des moyens 58 de séparation du deuxième assemblage 28 et du noyau transitoire 16 l'un de l'autre.

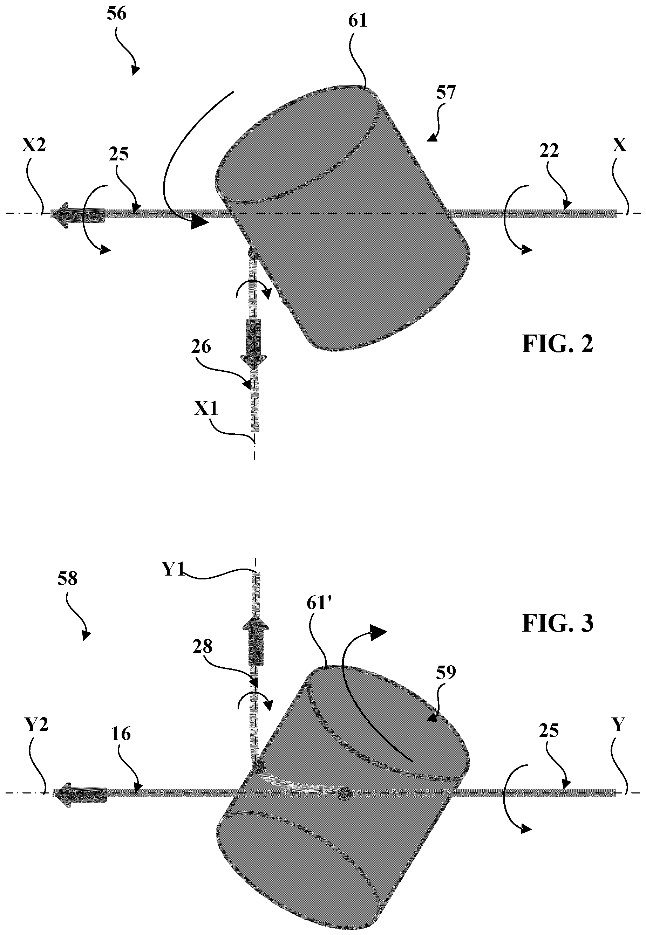

On a représenté sur la figure 2 les moyens de séparation 56. L'assemblage transitoire 22 défile selon une direction de défilement amont X. Après le passage dans les moyens de séparation 56, le premier assemblage 26 défile selon une direction de défilement aval X1 et l'ensemble transitoire 25 selon une direction aval X2. Les moyens de séparation 56 comprennent des moyens 57 de guidage permettant d'une part, la translation des premier assemblage 26 et ensemble transitoire 25 respectivement selon les directions avals X1, X2 et d'autre part, la rotation des premier assemblage 26 et ensemble transitoire 25 respectivement autour des directions avals X1, X2. En l'espèce, les moyens 57 comprennent un rouleau 61 rotatif incliné.

On a représenté sur la figure 3 les moyens de séparation 58. L'ensemble transitoire 25 défile selon une direction de défilement amont Y. Après le passage dans les moyens de séparation 58, le deuxième assemblage 28 défile selon une direction de défilement aval Y1 et le noyau transitoire 16 selon une direction aval Y2. Les moyens de séparation 58 comprennent des moyens 59 de guidage permettant d'une part, la translation des deuxième assemblage 28 et noyau transitoire 16 respectivement selon les directions avals Y1, Y2 et d'autre part, la rotation des deuxième assemblage 28 et noyau transitoire 16 respectivement autour des directions avals Y1, Y2. En l'espèce, les moyens 59 comprennent un rouleau 61' rotatif incliné.

L'homme du métier saura déterminer l'inclinaison des rouleaux 61, 61' en fonction notamment des vitesses de défilement et des diamètres des assemblages.

En référence à la figure 1, les moyens de séparation 54 comprennent également, en aval des moyens de séparation 56, 58, des moyens 60, 60' de guidage respectivement des premier et deuxième assemblages 26, 28. Les moyens de guidage 60, 60' permettent respectivement, de façon analogue aux moyens 57, 59, la translation de chaque premier et deuxième assemblage 26, 28 selon leur direction aval respectives et la rotation de chaque premier et deuxième assemblage 26, 28 autour de leur direction aval respectives. Chaque moyen de guidage 60, 60' comprend un rouleau rotatif incliné analogue aux rouleaux 61, 61'.

Les moyens 34 d'entretien de la rotation comprennent, pour chaque assemblage 26, 28, un twister 62, par exemple un twister à quatre poulies permettant d'entretenir la rotation de chaque assemblage respectivement autour des directions avals X1, Y1.

Les moyens d'équilibrage 35 final comprennent également, pour chaque assemblage 26, 28, un twister 63, par exemple un twister à quatre poulies.

Les moyens de stockage 36 comprennent ici deux bobines 64, 66 de stockage respectivement de chaque premier et deuxième assemblage 26, 28.

Afin de recycler le noyau transitoire 16, l'installation 10 comprend des moyens de guidage 69 du noyau transitoire 16 entre, d'une part, une sortie 68 des moyens de fractionnement 24 et d'autre part, une entrée 70 dans les moyens d'assemblage 18.

On notera que l'installation 10 est dépourvue de moyens de préformation, en particulier des moyens de préformation individuelle des éléments filaires 14 agencés en amont des moyens d'assemblage 18.

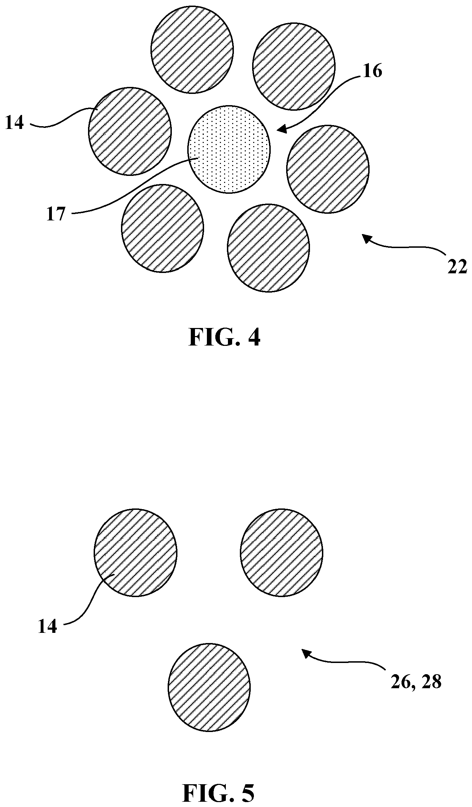

On a représenté sur la figure 4 l'assemblage transitoire 22 comprenant M éléments filaires enroulés ensemble en hélice autour du noyau transitoire 16 comprenant N élément(s) filaire(s) 17. L'assemblage transitoire 22 comprend M=6 éléments filaires 14. Le noyau transitoire 16 comprend ici un unique élément filaire 17 (N=1).

Chaque élément filaire 14 comprend, ici est constitué d'un unique monofilament élémentaire métallique de section circulaire, ici en acier au carbone, présentant un diamètre compris entre 0,05 et 0,50 mm, et ici égal à 0,26 mm. Chaque élément filaire 17 comprend plusieurs brins multifilamentaires, chacun appelé surtors, comprenant chacun plusieurs monofilaments élémentaires et assemblés ensemble en hélice pour former un retors. Les monofilaments élémentaires sont textiles, ici en PET.

On a représenté sur la figure 5 chaque premier et deuxième assemblage 26, 28 conforme au premier mode de réalisation de l'invention. Le premier assemblage 26 comprend une couche de M1=3 éléments filaires 14 enroulés ensemble en hélice. De même, le deuxième assemblage 28 comprend une couche de M2=3 éléments filaires 14 enroulés ensemble en hélice. Chaque assemblage 26, 28 est dépourvu d'âme centrale. Chaque premier et deuxième assemblage 26, 28 est à simple hélice.

Chaque premier et deuxième assemblage 26, 28 présente un allongement structural supérieur ou égal à 2,0% mesuré selon la norme ASTM A931-08. Avantageusement, il présente un allongement structural supérieur ou égal à 3,0%, de préférence 4,0% et plus préférentiellement 5,0% mesuré selon la norme ASTM A931-08. En l'espèce, l'allongement structural de chaque premier et deuxième assemblage 26, 28 est égal à 5,0% mesuré selon la norme ASTM A931-08.

Chaque élément filaire de la couche de chaque premier et deuxième assemblage 26, 28 présente une torsion autour de son propre axe de révolution. Chaque élément filaire de la couche de chaque premier et deuxième assemblage 26, 28 est dépourvu de marques de préformation.

De tels assemblages 26, 28 sont notamment utilisés en pneumatique et plus préférentiellement dans les nappes de protection ou de frettage de pneumatiques telles que décrites précédemment.

Nous allons maintenant décrire un procédé de fabrication des assemblages 26, 28 selon un premier mode de réalisation, mis en oeuvre au moyen de l'installation 10. Ce procédé permet de fabriquer simultanément les assemblages 26, 28.

Tout d'abord, on déroule les éléments filaires 14 et le noyau transitoire 16 depuis les moyens d'alimentation 12, ici les bobines 38, 40.

Puis, le procédé comprend une étape d'assemblage des M éléments filaires 14 en une unique couche de M éléments filaires autour du noyau transitoire 16. Lors de cette étape d'assemblage, on forme l'assemblage transitoire 22. On réalise l'étape d'assemblage par retordage grâce au retordeur 48, à la lyre 52 et la nacelle 53.

Ensuite, le procédé comprend une étape d'équilibrage de l'assemblage transitoire 22 réalisée grâce au twister 50.

Puis, le procédé comprend une étape de fractionnement de l'assemblage transitoire 22 en les premier et deuxième assemblages 26, 28. Dans ce premier mode de réalisation, l'étape de fractionnement de l'assemblage transitoire comprend une étape de séparation du noyau transitoire 16 des premier et deuxième assemblages 26, 28. Durant l'étape de fractionnement, on sépare le premier assemblage 26 d'un ensemble 25 formé par le deuxième assemblage 28 et le noyau transitoire 16, puis on sépare le deuxième assemblage 28 et le noyau transitoire 16 l'un de l'autre.

D'une part, concernant les premier et deuxième assemblages 26, 28, le procédé comprend une étape d'entretien de la rotation des premier et deuxième assemblages 26, 28 autour de leur direction de défilement aval respective X1, Y1. On réalise cette étape d'entretien en aval de l'étape de fractionnement de l'assemblage transitoire 22 grâce aux moyens 34.

Le procédé comprend également une étape d'équilibrage des premier et deuxième assemblages 26, 28. On réalise cette étape d'équilibrage final en aval de l'étape d'équilibrage intermédiaire grâce aux moyens 35.

Enfin, on stocke chaque premier et deuxième assemblage 26, 28 dans les bobines de stockage 64, 66.

D'autre part, concernant le noyau transitoire 16, le procédé comprend une étape de recyclage du noyau transitoire 16. Durant cette étape de recyclage, on récupère le noyau transitoire 16 en aval de l'étape de fractionnement, et on introduit le noyau transitoire 16 récupéré précédemment en amont de l'étape d'assemblage. Cette étape de recyclage est continue.

On notera que le procédé ainsi décrit est dépourvu d'étapes de préformation individuelle de chacun des éléments filaires 14.

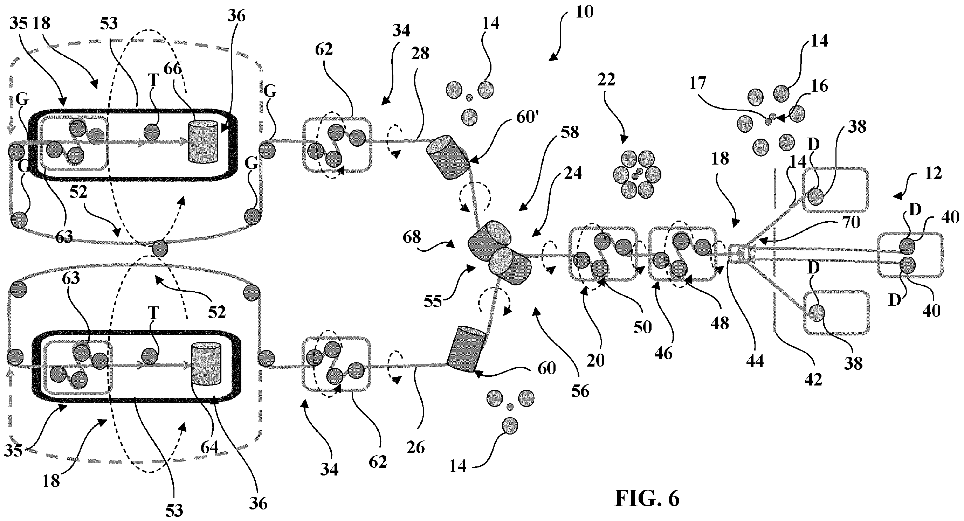

On a illustré sur les figures 6 à 8 un procédé ainsi que des assemblages transitoires et selon l'invention conforme à un deuxième mode de réalisation. Les éléments analogues à ceux représentés sur les figures 1 à 5 sont désignés par des références identiques.

A la différence du premier mode de réalisation, l'installation de la figure 6 est dépourvue de moyens de guidage 69 du noyau transitoire 16 entre la sortie 68 et l'entrée 70. En outre, les moyens de fractionnement 24 comprennent des moyens 55 de fractionnement du noyau transitoire entre au moins les premier et deuxième assemblages 26, 28.

Les moyens de fractionnement 55 comprennent des moyens 56 de séparation d'au moins une première partie 27 du noyau transitoire 16 avec des premiers éléments filaires 29 de l'assemblage transitoire 22 de façon à former le premier assemblage 26. Les moyens de fractionnement 55 comprennent également des moyens 58 de séparation d'au moins une deuxième partie 27' du noyau transitoire 16 avec des deuxièmes éléments filaires 29' de l'assemblage transitoire 22 de façon à former le deuxième assemblage 28.

Les moyens 56, 58 de séparation des premier et deuxième assemblages l'un de l'autre comprenant des moyens de guidage permettant d'une part, la translation des premier et deuxième assemblages 26, 28 selon leurs directions avals respectives et d'autre part, la rotation des premier et deuxième assemblages 26, 28 autour de leurs directions avals respectives. A la différence du premier mode de réalisation, les moyens de séparation 56, 58 du deuxième mode de réalisation comprennent un unique rouleau incliné rotatif 61. Le rouleau incliné rotatif 61' n'assure pas la séparation des premier et deuxième assemblages 26, 28 l'un de l'autre mais uniquement le guidage du deuxième assemblage 28.

A la différence du procédé selon le premier mode de réalisation, le procédé selon le deuxième mode de réalisation ne comprend pas d'étape de recyclage du noyau transitoire 16. Dans ce deuxième mode de réalisation, l'étape de fractionnement de l'assemblage transitoire comprend une étape de fractionnement du noyau transitoire 16, ici de la totalité du noyau transitoire 16, entre les premier et deuxième assemblages 26, 28.

Durant l'étape de fractionnement, on fractionne au moins la première partie 27 du noyau transitoire 16 avec les premiers éléments filaires 29 de l'assemblage transitoire 22 de façon à former le premier assemblage 26. Durant l'étape de fractionnement, on fractionne également au moins la deuxième partie 27' du noyau transitoire 16 avec les deuxièmes éléments filaires 29' de l'assemblage transitoire 22 de façon à former le deuxième assemblage 28. Ainsi, on forme simultanément les premier et deuxième assemblages 26, 28.

Avant l'étape de fractionnement, les première et deuxième parties 27, 27' du noyau transitoire 16 constituent le noyau transitoire 16.

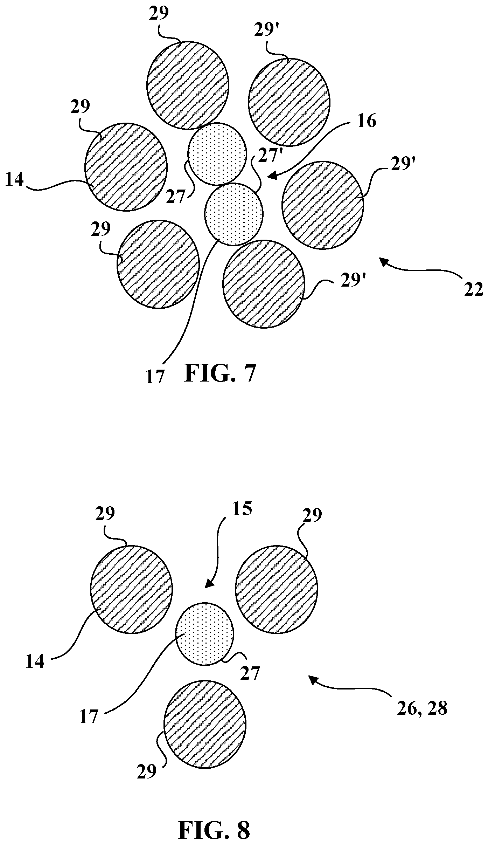

Ainsi, comme illustré sur la figure 7, l'assemblage transitoire 22 comprend une couche de M éléments filaires répartis en deux parties 29, 29' et enroulés ensemble en hélice autour du noyau transitoire 16 comprenant N éléments filaires 17 et répartis en deux parties 27, 27'. L'assemblage transitoire 22 comprend M=6 éléments filaires 14. Le noyau transitoire 16 comprend ici deux éléments filaires 17 (N=2).

Comme illustré sur les figures 6 et 8, chaque assemblage 26, 28 comprend M1=M2=4 éléments filaires comprenant une couche d'éléments filaires 14 enroulés ensemble en hélice et une âme centrale 15 comprenant un ou plusieurs élément(s) filaire(s) 17 du noyau transitoire 16 et autour de laquelle sont enroulés ensemble en hélice les éléments filaires 14 de la couche.

En l'espèce, le premier assemblage 26 comprend une couche de P1 éléments filaires 14 enroulés ensemble en hélice et une âme centrale 15 comprenant, ici constituée par la première partie 27 (N1 élément(s) filaire(s), ici N1=1) des N élément(s) filaire(s) 17 du noyau transitoire 16 et autour de laquelle sont enroulés ensemble en hélice la première partie 29 des M éléments filaires formée par les P1 éléments filaires 14 de la couche. On a P1+N1=M1.

Le deuxième assemblage comprend une couche de P2 éléments filaires 14 enroulés ensemble en hélice et une âme centrale 15 comprenant, ici constituée par la deuxième partie 27' (N2 élément(s) filaire(s), ici N2=1) des N élément(s) filaire(s) 17 du noyau transitoire 16 et autour de laquelle sont enroulés ensemble en hélice la deuxième partie 29' des M éléments filaires formée par les P2 éléments filaires 14 de la couche. On a P2+N2=M2.

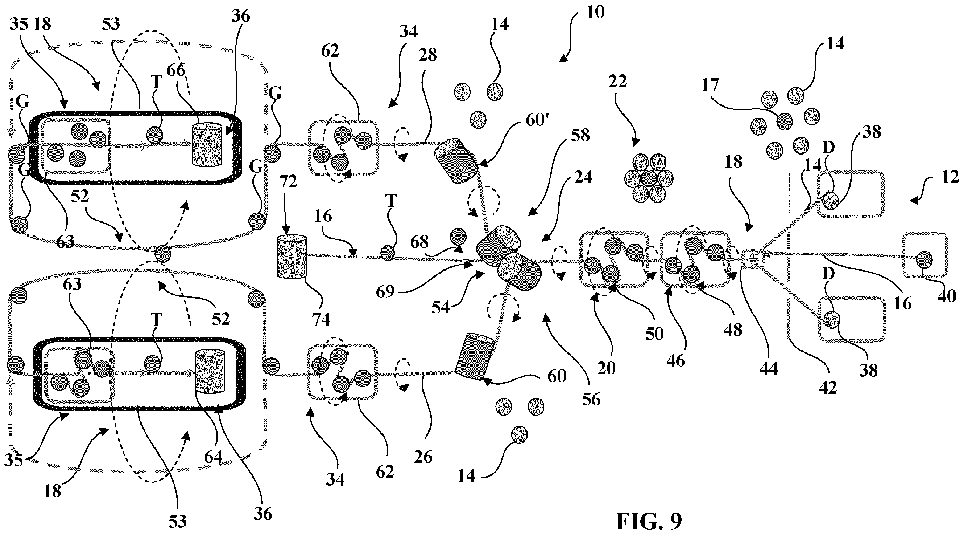

On a illustré sur la figure 9 une installation permettant de mettre en oeuvre un procédé selon un troisième mode de réalisation de l'invention et de fabriquer le câble de la figure 1. Les éléments analogues à ceux représentés sur les figures précédentes sont désignés par des références identiques.

A la différence du premier mode de réalisation, l'installation de la figure 9 est dépourvue de moyens de guidage 60 du noyau transitoire 16 entre la sortie 68 et l'entrée 70. L'installation 10 comprend des moyens 72 de stockage du noyau transitoire 16 agencés en aval de la sortie 68. Ces moyens 72 comprennent par exemple une bobine de stockage 74. Les moyens de guidage 69 du troisième mode de réalisation permettent le guidage du noyau transitoire 16 entre la sortie 68 et les moyens de stockage 72.

L'invention ne se limite pas aux modes de réalisation précédemment décrits.

En effet, on pourra envisager d'exploiter l'invention avec des éléments filaires comprenant chacun plusieurs monofilaments élémentaires métalliques. De tes éléments filaires, appelés torons, sont destinés à former, une fois assemblés, un câble multi-torons.

On pourra envisager, durant l'étape de fractionnement, de séparer simultanément le noyau transitoire, le premier assemblage et le deuxième assemblage deux à deux les uns des autres.

On pourra également envisager d'obtenir des assemblages 26, 28 d'éléments filaires comprenant une couche de plusieurs éléments filaires enroulés ensemble en hélice autour d'un noyau central comprenant plusieurs éléments filaires. De tels assemblages 26, 28 peuvent alors être par exemple obtenus à partir d'assemblage transitoires 22 de structure 2X+2Y, par exemple 4+14, 4+16, 4+18, 6+14, 6+16 ou 6+18 afin de présenter des structure du type X+Y avec X>1, par exemple 2+7, 2+8, 2+9, 3+7, 3+8 ou 3+9.

On pourra également envisager d'exploiter un procédé dans lequel les assemblages 26, 28 ne présentent pas nécessairement la même structure. Ainsi, des assemblages 26, 28, respectivement de structure X+Y, Z+T avec X≠Z et/ou Y≠T, peuvent être obtenus à partir d'un assemblage transitoire 22 de structure (X+Z)+(Y+T). Par exemple, un assemblage transitoire 22 de structure 3+15 permet d'obtenir deux assemblages de structure 1+8 et 2+7.

On pourra également envisager un fractionnement de l'assemblage transitoire en plus que deux assemblages, par exemple 3 ou 4.

## Revendications

1. Procédé de fabrication d'au moins des premier et deuxième assemblages (26, 28) à simple hélice présentant une aération de M1 éléments filaires et M2 éléments filaires, au moins l'un des premier et deuxième assemblages (26, 28) comprenant plusieurs des éléments filaires (14) enroulés ensemble en hélice, **caractérisé en ce qu'il** comprend :
- une étape d'assemblage de M éléments filaires (14) ensemble en une couche des M éléments filaires (14) autour d'un noyau transitoire (16) pour former un assemblage transitoire (22), et
- une étape de fractionnement de l'assemblage transitoire (22) en au moins les premier et deuxième assemblages (26, 28) de M1 éléments filaires et M2 éléments filaires ;
dans lequel chaque élément filaire (14) comprend un unique monofilament élémentaire.

2. Procédé de fabrication d'au moins des premier et deuxième assemblages (26, 28) à simple hélice présentant une aération de M1 éléments filaires et M2 éléments filaires, au moins l'un des premier et deuxième assemblages (26, 28) comprenant plusieurs des éléments filaires (14) enroulés ensemble en une simple hélice , **caractérisé en ce qu'il** comprend :
- une étape d'assemblage de M éléments filaires (14) ensemble en une couche des M éléments filaires (14) autour d'un noyau transitoire (16) pour former un assemblage transitoire (22), et
- une étape de fractionnement de l'assemblage transitoire (22) en au moins les premier et deuxième assemblages (26, 28) à structure ouverte de M1 éléments filaires et M2 éléments filaires ;
dans lequel chaque élément filaire (14) comprend un assemblage de plusieurs monofilaments élémentaires.

3. Procédé selon la revendication 1 ou 2, dans lequel l'étape de fractionnement de l'assemblage transitoire (22) comprend une étape de séparation du noyau transitoire (16) des premier et deuxième assemblages (26, 28).

4. Procédé selon l'une quelconque des revendications précédentes, dans lequel, durant l'étape de fractionnement, on sépare le premier assemblage (26) d'un ensemble transitoire (25) formé par le deuxième assemblage (28) et le noyau transitoire (16), puis on sépare le deuxième assemblage (28) et le noyau transitoire (16) l'un de l'autre.

5. Procédé selon l'une quelconque des revendications précédentes, comprenant une étape de recyclage du noyau transitoire (16) durant laquelle:
- on récupère le noyau transitoire (16) en aval de l'étape de fractionnement, et
- on introduit le noyau transitoire (16) récupéré précédemment en amont de l'étape d'assemblage.

6. Procédé selon la revendication 1 ou 2, dans lequel l'étape de fractionnement de l'assemblage transitoire (22) comprend une étape de fractionnement du noyau transitoire (16) entre au moins les premier et deuxième assemblages (26, 28).

7. Procédé selon la revendication 6, dans lequel, durant l'étape de fractionnement, on fractionne au moins une première partie (27) du noyau transitoire (16) avec des premiers éléments filaires (29) de l'assemblage transitoire (22) de façon à former le premier assemblage (26).

8. Procédé selon la revendication 6 ou 7, dans lequel, durant l'étape de fractionnement, on fractionne au moins une deuxième partie (27') du noyau transitoire (16) avec des deuxièmes éléments filaires (29') de l'assemblage transitoire (22) de façon à former le deuxième assemblage (28).

9. Procédé selon les revendications 7 et 8 prises ensembles, dans lequel, avant l'étape de fractionnement, les première et deuxième parties (27, 27') du noyau transitoire (16) constituent le noyau transitoire (16).

10. Procédé selon l'une quelconque des revendications précédentes, dans lequel on réalise l'étape d'assemblage par retordage.

11. Procédé selon l'une quelconque des revendications précédentes, comprenant une étape d'équilibrage de l'assemblage transitoire (22).

12. Procédé selon l'une quelconque des revendications précédentes, dépourvu d'étapes de préformation individuelle de chacun des éléments filaires (14,).

13. Procédé selon l'une quelconque des revendications précédentes, dans lequel le au moins l'un des premier et deuxième assemblages (26, 28) comprend une couche de plusieurs éléments filaires (17) enroulés ensemble en hélice.

14. Procédé selon l'une quelconque des revendications 1 et 3 à 13, dans lequel le au moins l'un des premier et deuxième assemblages (26, 28) présente un allongement structural supérieur ou égal à 2,0%, de préférence supérieur ou égal à 3,0%, plus préférentiellement supérieur ou égal à 4,0% et encore plus préférentiellement 5,0% mesuré selon la norme ASTM A931-08.

## Patentansprüche

1. Verfahren für die Herstellung wenigstens eines ersten und eines zweiten Aufbaus (26, 28) mit einfacher Schraubenlinie, die eine Belüftung aufweisen, aus M1 Faserelementen und M2 Faserelementen, wobei der erste und/oder der zweite Aufbau (26, 28) mehrere Faserelemente (14), die zusammen zu einer Schraubenlinie gewickelt sind, umfassen, **dadurch gekennzeichnet, dass** es Folgendes umfasst:
- einen Schritt des Aufbauens von M Faserelementen (14) zusammen zu einer Schicht aus M Faserelementen (14) um einen Übergangskern (16), um einen Übergangsaufbau (22) zu bilden, und
- einen Schritt des Unterteilens des Übergangsaufbaus (22) wenigstens in den ersten und den zweiten Aufbau (26, 28) aus M1 Faserelementen und M2 Faserelementen;
wobei jedes Faserelement (14) ein einziges elementares Monofilament enthält.

2. Verfahren für die Herstellung wenigstens eines ersten und eines zweiten Aufbaus (26, 28) mit einfacher Schraubenlinie, die eine Belüftung aufweisen, aus M1 Faserelementen und M2 Faserelementen, wobei der erste und/oder der zweite Aufbau (26, 28) mehrere Faserelemente (14), die zusammen zu einer einfachen Schraubenlinie gewickelt sind, umfassen, **dadurch gekennzeichnet, dass** es Folgendes umfasst:
- einen Schritt des Aufbauens von M Faserelementen (14) zusammen zu einer Schicht aus M Faserelementen (14) um einen Übergangskern (16), um einen Übergangsaufbau (22) zu bilden, und
- einen Schritt des Unterteilens des Übergangsaufbaus (22) wenigstens in den ersten und den zweiten Aufbau (26, 28) mit offener Struktur aus M1 Faserelementen und M2 Faserelementen;
wobei jedes Faserelement (14) einen Aufbau aus mehreren elementaren Monofilamenten enthält.

3. Verfahren nach Anspruch 1 oder 2, wobei der Schritt des Unterteilens des Übergangsaufbaus (22) einen Schritt des Trennens des Übergangskerns (16) von dem ersten und dem zweiten Aufbau (26, 28) umfasst.

4. Verfahren nach einem der vorhergehenden Ansprüche, wobei während des Unterteilungsschrittes der erste Aufbau (26) von einer Übergangsanordnung (25), die durch den zweiten Aufbau (28) und den Übergangskern (16) gebildet ist, getrennt wird und dann der zweite Aufbau (28) und der Übergangskern (16) voneinander getrennt werden.

5. Verfahren nach einem der vorhergehenden Ansprüche, das einen Schritt des Zurückführens des Übergangskerns (16) umfasst, in dem:
- der Übergangskern (16) nach dem Unterteilungsschritt wiedergewonnen wird und
- der vorher wiedergewonnene Übergangskern (16) vor dem Aufbauschritt eingeführt wird.

6. Verfahren nach Anspruch 1 oder 2, wobei der Schritt des Unterteilens des Übergangsaufbaus (22) einen Schritt des Unterteilens des Übergangskerns (16) wenigstens zwischen dem ersten und dem zweiten Aufbau (26, 28) umfasst.

7. Verfahren nach Anspruch 6, wobei während des Unterteilungsschrittes wenigstens ein erster Teil (27) des Übergangskerns (16) mit ersten Faserelementen (29) von dem Übergangsaufbau (22) abgeteilt wird, derart, dass der erste Aufbau (26) gebildet wird.

8. Verfahren nach Anspruch 6 oder 7, wobei während des Unterteilungsschrittes wenigstens ein zweiter Teil (27') des Übergangskerns (16) mit zweiten Faserelementen (29') von dem Übergangsaufbau (22) abgeteilt wird, derart, dass der zweite Aufbau (28) gebildet wird.

9. Verfahren sowohl nach Anspruch 7 als auch nach Anspruch 8, wobei vor dem Unterteilungsschritt der erste und der zweite Teil (27, 27') des Übergangskerns (16) den Übergangskern (16) bilden.

10. Verfahren nach einem der vorhergehenden Ansprüche, wobei der Aufbauschritt durch Zwirnen ausgeführt wird.

11. Verfahren nach einem der vorhergehenden Ansprüche, das einen Schritt des Auswuchtens des Übergangsaufbaus (22) umfasst.

12. Verfahren nach einem der vorhergehenden Ansprüche, das keine Schritte des einzelnen Vorformens jedes der Faserelemente (14) umfasst.

13. Verfahren nach einem der vorhergehenden Ansprüche, wobei der erste und/oder der zweite Aufbau (26, 28) eine Schicht aus mehreren Faserelementen (17), die zusammen zu einer Schraubenlinie gewickelt sind, enthalten.

14. Verfahren nach einem der Ansprüche 1 und 3 bis 13, wobei der erste und/oder der zweite Aufbau (26, 28) eine strukturelle Dehnung größer oder gleich 2,0 %, vorzugsweise größer oder gleich 3,0 %, stärker bevorzugt größer oder gleich 4,0 % und noch stärker bevorzugt 5,0 %, gemessen gemäß der Norm ASTM A931-08, aufweisen.

## Claims

1. Method for the manufacture of at least first and second assemblies (26, 28) which are single-helix assemblies with an openness of M1 filamentary elements and M2 filamentary elements, at least one of the first and second assemblies (26, 28) comprising several filamentary elements (14) wound together in a helix, **characterized in that** it comprises:
- a step of assembling M filamentary elements (14) together into a layer of the M filamentary elements (14) around a temporary core (16) to form a temporary assembly (22), and
- a step of splitting the temporary assembly (22) into at least the first and second assemblies (26, 28) of M1 filamentary elements and M2 filamentary elements; in which each filamentary element (14) comprises a single elementary monofilament.

2. Method for the manufacture of at least first and second assemblies (26, 28) which are single-helix assemblies with an openness of M1 filamentary elements and M2 filamentary elements, at least one of the first and second assemblies (26, 28) comprising several filamentary elements (14) wound together in a helix, **characterized in that** it comprises:
- a step of assembling M filamentary elements (14) together into a layer of the M filamentary elements (14) around a temporary core (16) to form a temporary assembly (22), and
a step of splitting the temporary assembly (22) into at least the first and second assemblies (26, 28) of M1 filamentary elements and M2 filamentary elements; in which each filamentary element (14) comprises an assembly of several elementary monofilaments.

3. Method according to Claim 1 or 2, in which the step of splitting the temporary assembly (22) comprises a step of separating the temporary core (16) from the first and second assemblies (26, 28).

4. Method according to any one of the preceding claims, in which, during the splitting step, the first assembly (26) is separated from a temporary collection (25) formed by the second assembly (28) and the temporary core (16), then the second assembly (28) and the temporary core (16) are separated from one another.

5. Method according to any one of the preceding claims, comprising a step of recycling the temporary core (16), during which:
- the temporary core (16) is recovered downstream of the splitting step, and
- the temporary core (16) previously recovered is introduced upstream of the assembly step.

6. Method according to Claim 1 or 2, in which the step of splitting the temporary assembly (22) comprises a step of splitting the temporary core (16) between at least the first and second assemblies (26, 28).

7. Method according to Claim 6, in which, during the splitting step, at least a first part (27) of the temporary core (16) with first filamentary elements (29) is split from the temporary assembly (22) so as to form the first assembly (26).

8. Method according to Claim 6 or 7, in which, during the splitting step, at least a second part (27') of the temporary core (16) with second filamentary elements (29') is split from the temporary assembly (22) so as to form the second assembly (28).

9. Method according to Claims 7 and 8 considered together, in which, before the splitting step, the first and second parts (27, 27') of the temporary core (16) constitute the temporary core (16).

10. Method according to any one of the preceding claims, in which the assembly step is performed by twisting.

11. Method according to any one of the preceding claims, comprising a step of twist-balancing the temporary assembly (22).

12. Method according to any one of the preceding claims, having no steps of individually preforming each of the filamentary elements (14, 17).

13. Method according to any one of the preceding claims, in which at least first and second assemblies (26,28) comprises a layer of several filamentary elements (17) wound together in a helix.

14. Method according to any one of the claims 1 and 3 to 13, in which at least first and second assemblies (26,28) has a structural elongation greater than or equal to 2.0%, preferably 3.0%, more preferably 4.0% and even more preferably 5.0%, measured in accordance with standard ASTM A931-08.
